# EUROPEAN PATENT SPECIFICATION

(11) **EP 3 595 076 B1**
(45) Date of publication and mention of the grant of the patent: **13.05.2020**
(21) Application number: 18182603.3
(22) Date of filing: 10.07.2018
(51) Int. Cl.: H01M 10/42, H01M 10/48, B60L 3/00, B60L 3/04, B60L 3/12, B60L 58/00

(54) **BATTERY SYSTEM**
BATTERIESYSTEM
SYSTÈME DE BATTERIE

(43) Date of publication of application: 15.01.2020
(73) Proprietor: Samsung SDI Co., Ltd., Gyeonggi-do 17084 (KR)
(72) Inventor: Hofer, Maximilian, 8230 Hartberg (AT); Pretschuh, Markus, 8020 Graz (AT); Erhart, Michael, 8054 Seiersberg (AT)
(74) Representative: Gulde & Partner

(56) References cited:
- EP-A1- 2 919 346
- US-A1- 2010 209 748
- US-A1- 2016 226 107

## Description

### Field of the Invention

The present invention relates to a battery system with an integrated redundant relay control for disconnecting the battery system from an external load. The present invention further relates to a control unit for a battery system for providing such redundant relay control and to a method for operating a battery system by a control unit according to the present invention.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be a battery module formed of multiple battery submodules, each comprising battery cells coupled in series and/or parallel so as to provide a high energy density, e.g. for a hybrid vehicle. Such battery modules may be mechanically and electrically integrated, equipped with a thermal management system and set up for communication with each other and one or more electrical consumers to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters, a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit may communicate with the electrical consumers via a suitable communication bus, e.g. a CAN or SPI interface.

The BMS/BMU may further communicate with each of the battery submodules, particularly with a cell supervision circuit (CSC) of each of the battery submodules. The CSC may be further connected to a cell connection and sensing unit (CCU) of one or more of the battery submodules that may interconnect the battery cells of the respective battery submodule.

A battery system may further comprise a protection system to provide a voltage level control of a power interface of the battery system and to enable a fast and reliable safety shutdown of the power interface in the case of non-permissible operating conditions. Such protection system may be adapted to shutdown a power connection between the battery system and an external terminal of the battery system. A typical protection system comprises an electro-mechanical switch that is usually controlled by a microcontroller (MCU) of the battery system.

Typically, the microcontroller for controlling such electro-mechanical switch is also used for controlling other functions of the battery system. Exemplarily, the MCU is part of the BMS/BMU of the battery system. This provides a further integration of the battery system and hence advantageously reduces its material costs and the construction space requirements.

Examples of battery management systems according to the prior art are disclosed in each of the documents US 2010/0209748 A1, EP 2 919 346 A1, and US 2016/0226107 A1.

However, with increasing capacity of the battery systems utilized in at least partially electrically powered vehicles, the high voltage (HV) batteries shall be increasingly used for supplying security relevant functions of the vehicle, such as e.g. steer-by-wire, autonomous driving, or crash protection. The availability of the HV batteries thus becomes more important in order to provide security relevant functions with sufficient reliability. Exemplarily, some manufacturers already rank the availability of the HV batteries according to ASIL B standard.

In other words, a failure rate of the battery system must be sufficiently low. In the case of ASIL B for example a fit rate of 100 FIT (*"failure in time", i.e. failures per 10⁹ h*) or below must be achieved. These specifications have been hard to meet due to the microcontrollers usually utilized in the control units of battery systems, e.g. as MCU or System Basis Chip (SBS). Exemplarily, the MCU used in a common BMS/BMU may have a fit rate of up to 2000 FIT and may thus not be approved as to fulfil the requirements of ASIL B.

It is thus an object of the present invention to overcome or reduce the drawbacks of the prior art and to provide a battery system with improved availability, i.e. decreased FIT rate, which reliably provides security relevant functions, such as e.g. emergency shut down in due time.

### Description of the Invention

One or more of the drawbacks of the prior art could be avoided or at least reduced by means of the present invention, which relates to a control unit for a battery system as defined in claim 1, a battery system as defined in claim 5, a vehicle as defined in claim 11 and a method for operating a battery system as defined in claim 13. According to a first aspect of the present invention, a control unit for a battery system is provided, wherein the control comprises at least one input node that is configured for receiving at least one sensor signal, which is indicative of a state of at least one of a plurality of battery cells of the battery system. In other words, the control unit is configured for monitoring the state of the battery system by monitoring at least some of its battery cells. The sensor(s) supplying the sensor signal(s) is (are) either part of the control unit or the battery system. The input node is configured for single-ended or differential input.

The control unit further comprises a microcontroller that is connected to the at least one input node and is configured for generating a first control signal based on the sensor signal. Therein, the first control signal is suitable for controlling a power switch, e.g. a relay, of the battery system in which the control unit is utilized. Preferably, the first control signal is suitable for setting the power switch either conductive or non-conductive, e.g. by taking one of two values. The microcontroller is thus configured to control the protection system of the battery system. The protection system may e.g. be an overcurrent protection. Then the sensor signal refers to a current provided by the battery system. The microcontroller preferably provides further control functions with respect to the battery system. Particularly preferred, the microcontroller is also utilized as a BMS/BMU as described in the introduction. In other words, the control unit is preferably also configured to perform at least one control function with respect to at least one battery cell, preferably with respect to all battery cells of the battery system. The control functions preferably relates to measurements of cell voltages, cell currents, cell resistances or cell capacities. Further preferred, the control functions also relate to the active or passive balancing of cell voltages or cell currents of a plurality of battery cells. Preferably, the control functions further relate to data communication with the CSCs of battery cells or battery submodules of the battery system and with electrical consumers.

The control unit of the present invention further comprises a switch control circuit that is configured for controlling a power switch of the battery system. Therefore, the control unit comprises an output node for supplying at least one control signal to the power switch. The control signal is preferably suitable for setting the power switch either conductive or non-conductive. Also preferred, the control signal is suitable for freely setting the conductivity of the power switch. Particularly, the switch control circuit is configured for receiving the first control signal, e.g. from the microcontroller, and the sensor signal, e.g. from the input node.

The switch control circuit is further configured to receive a fault signal that is indicative of an operation state of the microcontroller. The fault signal is preferably generated by and received from the microcontroller itself. Alternatively, the fault signal is generated and received by an additional circuit or component that is configured for monitoring the microcontroller, such as e.g. a system basis chip as it is commonly known to the person skilled in the art.

The switch control circuit is further configured to generate a second control signal based on the sensor signal. Therein, the second control signal is suitable for controlling a power switch, e.g. a relay, of the battery system in which the control unit is utilized. Preferably, the second control signal is suitable for setting the power switch either conductive or non-conductive, e.g. by taking one of two values. Alternatively, the second control signal is configured to freely set the conductivity of the power switch. In a simple embodiment, the second control signal is generated by comparing the sensor signal to a predefined threshold value.

According to the present invention, the switch control circuit is configured to transmit one of the first control signal and the second control signal to an output node of the control unit based on the received fault signal. In other words, the switch control circuit is configured to control the power switch via the output node by transmitting either the first control signal or the second control signal, which are both suitable for setting the power switch either conductive or non-conductive. In other words, the switch control circuit of the present invention provides two core functionalities that is (a) generating a second control signal additionally to that generated by the microcontroller and (b) multiplexing these control signals.

According to the invention, the switch control circuit is configured for transmitting the first control signal to the output node (to the power switch) if the received fault signal is indicative of an operability of the microcontroller. In other words, during a normal mode of the microcontroller without a failure occurring therein, the microcontroller controls the power switch of the battery system. Thus, all functionalities and safety mechanisms, e.g. with respect to a plurality of different sensor values (temperature, current, voltage, gas composition), may be utilized for controlling the emergency shut down of the battery system.

Further, the switch control circuit is configured for transmitting the second control signal to the output node (to the power switch) if the fault signal is indicative of a malfunction of the microcontroller. In other words, if a failure occurs in the microcontroller, the control of the power switch via the microcontroller is stopped and the power switch becomes controlled by the switch control circuit. Advantageously, even in a fault situation of the microcontroller, a reliable emergency shut down of the battery system can be guaranteed. The control via the switch control circuit may be based on less sensor signals, e.g. only current sensor signals.

The control unit of the present invention advantageously provides a bypass to a microcontroller commonly used for controlling a power switch for emergency shut-down of a battery system. Therein, the availability of the battery system is improved by decreasing the FIT rate of the battery system, particularly of the protection system of the battery system, by providing an alternative signal path between a security relevant sensor value and a power switch. The control unit of the invention thus allows ASIL B classification of a battery system.

The control unit of the invention represent a basic solution for replacing the power switch control by the microcontroller with controlling the power switch by the switch control circuit. However, the switch control circuit may be configured to consider further input signals, e.g. indicative of an operation state of the vehicle or the battery system, indicative of environmental conditions, or indicative of an operation state of the switch control circuit before switching the control signal. Further, time constants may be applied before switching the control signals from the first control signal to the second control signal. An exemplary embodiment for a battery system of an electric vehicle is described in more detail below.

In a preferred embodiment, the control unit further comprises a front end circuit, preferably an analog front end (AFE), that is connected to the input node and that is configured for generating a state signal based on the sensor signal. In a simple embodiment, the state signal is equal to one of the at least one sensor signal, which may be selected by a multiplexer. However, preferably the front end circuit comprises one or more of an analog amplifier, an operation amplifier, filters, and an analog to digital converter. Thus, the state signal is preferably a processed signal, e.g. with improved S/N ratio, decreased disturbances, amplified with respect to a predefined reference voltage (baseline voltage), or already converted to a digital signal. The skilled person is aware of different front end circuits suitable for receiving different sensor signal inputs. If a front end circuit is part of the control unit, any sensor signal is replaced by the state signal downstream the front end circuit. In the following, without being limited thereto, solely a control unit comprising a front end circuit is described.

According to another preferred embodiment, the control unit further comprises an amplification circuit that is interconnected between the front end circuit and the switch control circuit. Alternatively, the amplification circuit is interconnected between the at least one input node of the control unit and the switch control circuit. According to these embodiments, the switch control circuit is further configured to generate the second control signal based on the amplified sensor signal. These preferred embodiments advantageously allow utilizing the state signal or even the sensor signal directly for deriving the second control signal, without any further amplification necessary in the switch control circuit. Therein, amplifying the signal in the amplification circuit advantageously allows utilizing solely hardware components without any further programmable integrated circuits downstream the amplification circuit. If the sensor signals are amplified, this embodiment advantageously provides another bypass around the front end circuit, e.g. in a case where a failure of the microcontroller is due to a cause that also influences the front end circuit, such as e.g. electro-magnetic interference.

In a particularly preferred embodiment of the control unit, the switch control circuit is configured as a hardware path. In other words, the switch control circuit does not comprise any programmable components of a certain complexity and/or integrated circuits, such as ASICs or MCUs, but consists solely of simple electronic hardware components, such as e.g. voltage dividers, transistors, resistors, capacitors, operational amplifiers and/or electronic hardware components with comparable functionality or formed of the aforementioned. Thus, the switch control circuit realizes fast reaction and switching times with high reliability. Particularly preferred, the switch control circuit has an FIT rate of 100 or less. Further preferred, the whole hardware path between the input nodes and the output node of the control unit is configured as a hardware path with a FIT rate of 100 or less. The skilled person is aware of how to determine FIT rates of a hardware path based on FIT of its components.

Particularly preferred, the control unit of the present invention further comprises a system basis chip that is configured for monitoring the microcontroller. Further preferred, the system basis chip is configured for generating the fault signal and transmitting the fault signal to the switch control circuit. Particularly preferred, the system basis chip is configured for generating a fault signal indicative of a malfunction of the microcontroller in response to detecting a malfunction of the microcontroller and for generating a fault signal indicative of an operability of the microcontroller otherwise. Above that the system basis chip may be configured to perform further functions, such as e.g. supervision functions, reset generators, watchdog functions, bus interface (LIN, CAN, etc.), wake-up logic, and/or power switches. Further preferred, the power switch controlled by the control unit is a relay. These embodiments advantageously further increase the reliability of the control unit with respect to protection.

Another aspect of the present invention relates to a battery system that comprises a plurality of battery cells, which are electrically connected in series between a first node and a second node, a power switch that is interconnected between the first node or the second node and at least one external load, and a control unit according to the invention as described above. Therein, the output node of the control unit is connected to the power switch for controlling the conductivity of the power switch. The battery system of the present invention advantageously utilizes the positive effects provided by the control unit of the invention.

According to a particularly preferred embodiment of the invention, the switch control circuit is configured for setting the power switch non-conductive after a first time period after receiving a fault signal indicating a malfunction of the microcontroller. In other words, the switch control circuit shuts off the battery system from any external load after a fixed first time period lapsed since an error of the microcontroller has been detected. Therein, the shut off via the power switch preferably occurs irrespective of any other signal inputs to the switch control circuit. Thus, if the switch control circuit realizes a fault of the microcontroller it starts a first timer after that the power switch is inevitably set non-conductive. This functionality advantageously provides a reliable shut down in case of a microcontroller failure and hence allows for a low FIT rate and a high ASIL rating of a control unit according to the present invention.

According to another preferred embodiment of the invention, the switch control circuit is configured for generating a second control signal that causes the power switch to be set non-conductive if the sensor signal(the state signal) exceeds a predetermined threshold. Therefore the switch control circuit preferably comprises at least one comparator circuit or operational amplifier that receives the sensor signal (the state signal) as a first input and outputs the second control signal. The predetermined threshold may be supplied to such comparator or operational amplifier as second input by an external signal or from an internal memory. Hence, the switch control circuit advantageously also realizes a sensor-based emergency shutdown of the power switch, i.e. the battery system. Such emergency shutdown is preferably realized additionally to the timer-based shutdown, i.e. preferably only during the first predetermined time period.

According to further preferred embodiment of the invention, the switch control circuit is configured for setting the power switch conductive for a second time period after receiving a fault signal indicating a malfunction of the microcontroller. In other words, the switch control circuit generates and transmits a (third) control signal for setting the power switch conductive to the output node (power switch) for a fixed second time period starting with the detection of an error of the microcontroller. Preferably, the power switch is set conductive irrespective of any other signal inputs to the switch control circuit during the second time period. Thus, the sensor-based emergency shut-down of the switch control circuit is postponed for the second time period, wherein a shut-down of the power switch, i.e. the battery system, is prevented.

These feature advantageously allows for a transition phase between a normal operation of the control unit and the battery system controlled by the MCU and an availability mode, wherein the control unit and the battery system are controlled by the switch control circuit after a fault of the microcontroller occurred and before a sensor-based emergency shutdown is realized by the switch control circuit. Particularly preferred, the second time period is less than the FTTI of the plurality of battery cells and/or less than the first time period. This allows that the battery system reaches at safe state by applying the hardware-controlled sensor-based emergency shutdown by the switch control circuit within the *fault tolerant time interval.*

According to a further preferred embodiment, the battery system of the present invention further comprises at least one sensor that is configured for detecting at least one of a current, a voltage and a temperature of at least one of the plurality of battery cells as a sensor signal. In other words, the at least one sensor signal and/or the state signal is based on at least one of a voltage, a temperature and a current of at least one of the plurality of battery cells. Further preferred, the at least one sensor comprises a shunt resistor connected in series with one of the first and second node. The control unit thus comprises two input nodes for receiving a voltage drop over the shunt as sensor signal indicative of a battery current. The two input nodes may then be connected to the front end circuit and the switch control circuit.

Another aspect of the present invention relates to a vehicle, particularly an electric vehicle or hybrid vehicle, which comprises at least one first electrical consumer electrically connected as an external load to a battery system according to the present invention as described above. Hence, if a failure of the battery system's microcontroller occurs, an emergency shutdown of the at least one first electrical consumer is controlled by the switch control circuit. Thus, the reliability of the battery system, particularly its emergency shutdown, is improved.

Preferably, the vehicle further comprises at least one second electrical consumer that is electrically connected to the battery system and that is not security relevant for the vehicle. The vehicle of this embodiment further comprises a control unit that is configured for shutting off the at least one second electrical consumer in response to receiving a fault signal indicative of a malfunction of the microcontroller. Preferably, the control unit may be a system basis chip of the battery system's control unit as described above. This embodiment advantageously allows for shutting down the second electrical consumers of the vehicle immediately with the recognition of a fault of the battery system's microcontroller. Particularly preferred, high load consumers, such as e.g. the electric motor of the vehicle, are shut down as the second electrical consumer. Hence, a current drawn from the battery system is quickly reduced for safety reasons. Further, as the first electrical consumers are security relevant for the vehicle, controlling them by the hardware path switch control circuit as described above guarantees prolonged availability of the security relevant functions of these first consumers.

Particularly preferred, the first time period, the second time period, and the sensor-based emergency shutdown as described above are applied to the hardware control of the first electrical consumers after the microcontroller fault recognition. Thus, the security relevant functions of the first electrical consumers are guaranteed for the predetermined first time period, whereas a sensor based emergency shut-down is also provided during the first time period, except for the second time period in order to allow for a transition into the safe state.

Another aspect of the present invention relates to a method for operating a battery system, wherein the battery system comprises at least a plurality of battery cells that are electrically connected in series between a first node and a second node, a power switch that is interconnected between the first node or the second node and at least one external load, and a control unit that is configured for controlling the power switch.

In a first step, at least one sensor of the battery system detects at least one sensor signal that is indicative of a state of at least one of the plurality of battery cells. This detection preferably occurs during all the operation time of the battery system, i.e. during normal and availability mode. Further, the sensor signal preferably relates to at least one of a current, voltage, and temperature of at least one battery cell of the plurality of battery cells.

In the method of the present invention, then a microcontroller of the control unit determines a first control signal for controlling the power switch based on the sensor signal. Therein, the first control signal is suitable for controlling the power switch as described above. This step is predominantly performed during normal mode, i.e. as long as no fault of the microcontroller occurs. However, whether or not this step is performed after a fault of the microcontroller has occurred and is recognized is rather irrelevant for the method of the invention.

In the method of the invention, then the switch control circuit of the control unit receives the sensor signal and the first control signal as described above and a fault signal that is indicative of an operation state of the microcontroller. The fault signal may therein be received by the microcontroller itself or by another controller, e.g. a system basis chip, as described above. The switch control circuit then generates a second control signal based on the sensor signal, wherein the second control signal is suitable for controlling the power switch as described above. According to the invention, the switch control circuit transmits only one of the first control signal and the second control signal to the power switch via the output node of the control unit based on the received fault signal, i.e. on the value of the fault signal.

Preferably, the switch control circuit transmits the first control signal to the output node (to the power switch) if the received fault signal is indicative of an operability of the microcontroller. Further preferred, the switch control circuit transmits the second control signal to the output node (to the power switch) if the fault signal is indicative of a malfunction of the microcontroller. Hence, during a normal mode without a failure occurring in the microcontroller, the microcontroller controls the power switch of the battery system, while, if a failure occurs in the microcontroller, the control of the power switch via the microcontroller is stopped and the power switch becomes controlled solely by the switch control circuit.

Thus, in the normal mode all functionalities and safety mechanisms, e.g. with respect to a plurality of different sensor values (temperature, current, voltage, gas composition), may be utilized for controlling the emergency shut down of the battery system. However, even in a fault situation of the microcontroller, a reliable emergency shut down of the battery system is guaranteed, even if it might be based on less sensor signals, e.g. only a current sensor value.

In a preferred embodiment of the present method, a front end circuit of the control unit, determines a state signal based on the sensor signal. Therein, the state signal is basically a processed sensor signal that is more suitable for further processing by either the microcontroller or the switch control circuit as described in more detail above. If the front end circuit performs that step the sensor signal in the method as described above is replaced by the state signal downstream the front end circuit.

According to a preferred embodiment, the method of the present invention further comprises at least one of the following steps performed by the switch control circuit of the control unit.

The switch control circuit preferably sets the power switch to be non-conductive after a first time period after receiving a fault signal indicating a malfunction of the microcontroller. Hence, a reliable emergency shut-down is provided if a microcontroller fault occurs. The switch control circuit preferably sets the power switch conductive for a predetermined second time period after receiving a fault signal indicative of a malfunction of the microcontroller. Therein, the transmission of the first control signal preferably occurs irrespective of the sensor signal and state signal. Hence, a transition period can be provided for transferring a shut-down control form the microcontroller to the switch control circuit.

Further, the switch control circuit preferably generates, during the first time period, a second control signal causing the power switch to be set non-conductive if the state signal exceeds a predetermined threshold. Hence, a sensor-based emergency shut-down is advantageously provided even after a fault of the microcontroller occurred and while the control of the power switch is performed solely by the switch control circuit.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of a battery system according to a first embodiment;
- Fig. 2: illustrates a schematic view of a battery system according to a second embodiment;
- Fig. 3: illustrates a schematic view of a switch control circuit according to a first embodiment;
- Fig. 4: illustrates a schematic view of a switch control circuit according to a second embodiment; and
- Fig. 5: illustrates a timeline of a current of a battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to the illustrated embodiments. Accordingly, processes, elements, and techniques that are not considered necessary to those having ordinary skill in the art for a complete understanding of the aspects and features of the present invention may not be described. Further, in the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5%.

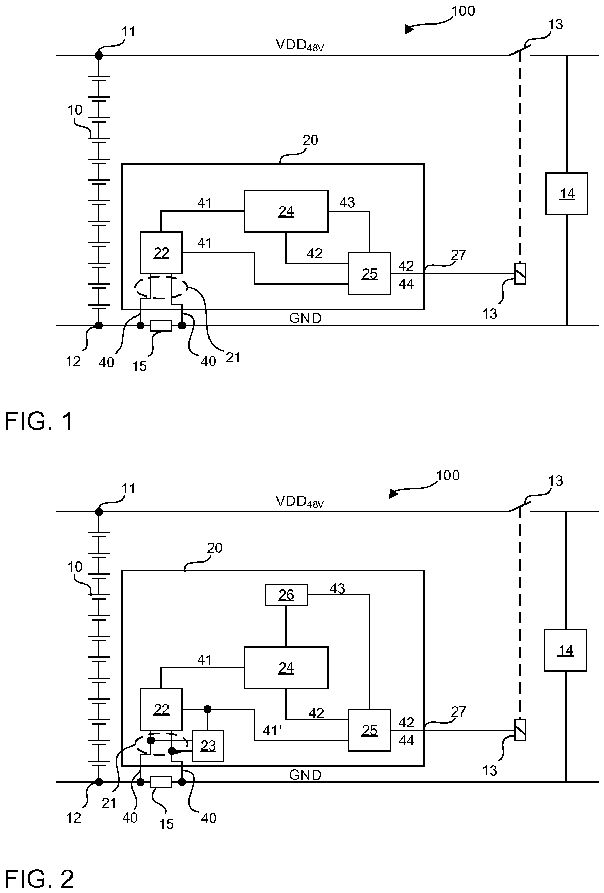

Figure 1 illustrates a schematic view of a battery system 100 according to a first embodiment. Therein, a plurality of battery cells 10 is connected in series between a first node 11 and a second node 12. Additionally, battery cells 10 may be connected in parallel between the first node 11 and the second node 12, forming an *XsYp* configuration between these nodes 11, 12. Further, battery submodules (not shown) may be connected between these nodes 11, 12.

Each of the twelve battery cells 10 provides a voltage of approximately 4 V such that a voltage VDD of approximately 48 V applies between the first node 11 and the second node 12. An external load 14 is supplied with this voltage of the battery cells 10. A relay 13 is interconnected as power switch between the first node 11 and the external load 14 for controlling the power supply to the external load 14. Therein, the conductivity state of the relay 13 is controlled by a control unit 20 via an output node 27 of the control unit 20.

The control unit 20 comprises an input node 21 that is configured for receiving a differential input and thus comprises two actual input nodes. These input nodes are connected upstream and downstream, respectively, of a shunt resistor 15 that is interconnected between the second node 12 and the external load 14. Hence, the input node 21 receives a voltage drop over the shunt resistor 15 as a sensor signal 40.

The control unit 20 further comprises a front end circuit 22 for receiving and processing the sensor signal 40 in order to generate a state signal 41 based on the sensor signal 40. In the present case, the state signal 41 is indicative of a current I provided by the plurality of battery cells 10 and is generated utilizing a known value of the resistance R of the shunt resistor 15.

The control unit 20 further comprises a microcontroller 24 that is connected to the front end circuit 22 and receives the state signal 41 from the front end circuit 22. The microcontroller 24 is further configured to generate a first control signal 42 based on the state signal 41. Therein, the first control signal 42 is suitable for setting the relay 13 either conductive or non-conductive. Particularly, the microcontroller 24 generates a first control signal 42 that sets the relay 13 conductive if the state signal 41 is indicate of a current within the standard operation conditions of the battery system 100. The microcontroller 24 generates a first control signal 42 that sets relay 13 non-conductive if the state signal 41 is indicate of an overcurrent.

The microcontroller 24 further generates and outputs a fault signal 43 that is indicative of an operation state of the microcontroller 24. Exemplarily, the fault signal 43 is based on self-testing of the microcontroller 24 and/or based on internal error codes that occur more than sporadic. The fault signal 43 is either indicative of an operability of the microcontroller 24 or of an malfunction of the microcontroller 24, i.e. takes one of two possible values, e.g. "0" or "1".

The control unit 20 further comprises a switch control circuit 25 that is connected to the front end circuit 22 and the microcontroller 24. The switch control circuit 25 the state signal 41 as an input receives from the front end circuit 22. As further inputs the switch control circuit 25 receives the first control signal 42 and the fault signal 43 from the microcontroller 24. The switch control circuit 25 is further connected to an output node 27 of the control unit 20.

The switch control circuit 25 is configured to generate a second control signal 44 based on the received state signal 41. Therein, the second control signal 44 is suitable for setting the relay 13 either conductive or non-conductive. The switch control circuit 25 generates a second control signal 44 that sets the relay 13 conductive if the state signal 41 is indicate of a current within standard operation conditions of the battery system 100 and generates a second control signal 44 that sets relay 13 non-conductive if the state signal 41 is indicate of overcurrent. Therein the overcurrent may differ from that of the first control signal 42.

The switch control circuit 25 outputs either the first control signal 42 or the second control signal 44 to the relay 13 via output node 27. The switch control circuit 25 puts one of these signals 42, 44 through to the output node 27 based on the fault signal 43. In other words, in dependency of the value of the fault signal 43, i.e. whether it is indicative of an operability or a malfunction of the microcontroller 24, the switch control circuit 25 selects one of the first and second control signal 42, 44 and outputs the selected control signal to relay 13 via node 27. Thus, the control unit 20 allows for continued control of relay 13 based on sensor signal 40 even if microcontroller 24 has a malfunction and cannot longer reliably control the relay 13.

Figure 2 illustrates a schematic view of a battery system 100 according to a second embodiment. Therein, the battery system 100 differs solely in the control unit 20 from that of the first embodiment, whereas all further components remain the same.

The control unit 20 of the second embodiment differs from that of the first embodiment in that it further comprises an amplification circuit 23 that is interconnected between the input node 21 and the conductive connection between the front end circuit 22 and the switch control circuit 25. The amplification circuit 23 provides a bypass of the front end circuit 22 and further allows for supplying the amplified sensor signal 41' to the switch control circuit 25. Hence, the hardware path of the control unit 20 between input nodes 21 and output node 27 via the switch control circuit 25 is also independent of the operability of front end circuit 22.

The control unit 20 of the second embodiment further differs in that it comprises a system basis chip 26 that is connected to the microcontroller 24 and the switch control circuit 25. The system basis chip 26 is configured to monitor an operation state of the microcontroller 24 and to generate and output a fault signal 43 that is indicative of an operability of the microcontroller 24. The system basis chip 26 may have further typical functionalities of an SBC and further improves the reliability of the control unit 20 as a severely malfunctioning microcontroller 24 may also not be able to reliably provide a fault signal 43 anymore.

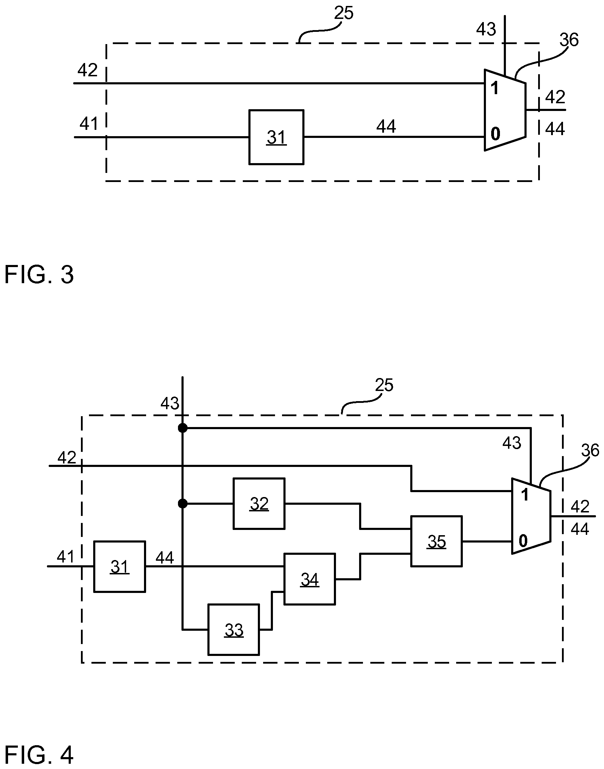

Figure 3 illustrates a schematic view of a switch control circuit 25 according to a first embodiment. Therein, the switch control circuit 25 may be part of the control unit 20 according to the first embodiment or the second embodiment. The switch control circuit 25 of the first embodiment realizes the core functionalities of this circuit with a very simple design.

The switch control circuit 25 of the first embodiment comprises a multiplexer 36 and a comparator 31. The comparator 31 is configured for comparing the state signal 41 (or the amplified sensor signal 41') with a predetermined threshold. Therein, the comparator 31 may comprise a further input (not shown) for receiving the predetermined threshold. The comparator 31 outputs a second control signal 44 that reflects whether the state signal 41 (or the amplified sensor signal 41') exceeds the predetermined threshold or not.

The multiplexer 36 comprises two data signal inputs and one control signal input. The first control signal 42 is supplied to a first data signal input and the output of the comparator 31 is supplied to the second data signal output. The fault signal 43 is supplied to the control signal input. The multiplexer 36 outputs one of the first and second control signal 42, 44 based on the value of the received fault signal 43.

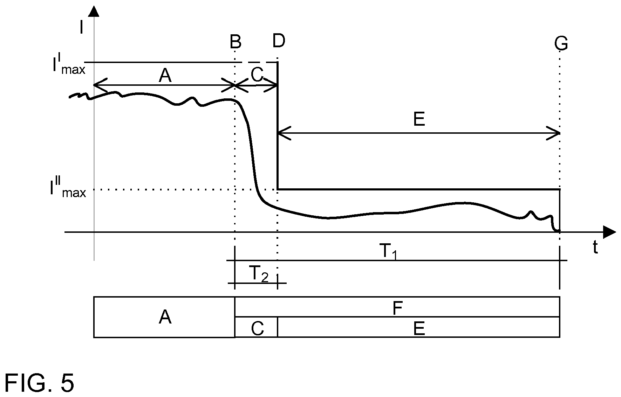

Figure 4 illustrates a schematic view of a switch control circuit 25 according to a second embodiment. Therein, the switch control circuit 25 may be part of the control unit 20 according to the first embodiment or the second embodiment. The switch control circuit 25 of the second embodiment realizes the core functionalities of this circuit and above that further functionalities related to the first time period and the second time period as described above. The operation of the switch control circuit 25 of the second embodiment is described under reference to the timeline of an output current of battery system 100 as shown in Figure 5.

The switch control circuit 25 of the second embodiment receives as input the state signal 41 (or the amplified sensor signal 41'), the first control signal 42 and the fault signal 43.

During a normal operation mode A (see Fig. 5) of the battery system 100 and the control unit 20, the microcontroller 24 operates without fault and a maximum current I^{I}ₘₐₓ is allowed to be provided by the battery system 100. During normal operation mode, the fault signal 43 is indicative of the operability of the microcontroller 24 and takes the binary value "1". The fault signal 43 is supplied to the multiplexer 36 as control signal input and sets the data signal input of the multiplexer 36 to the first data signal input 1 to which the first control signal 42 is supplied from the microcontroller 24. Hence, during normal operation mode A, the first control signal 42 is output to the relay 13 via multiplexer 36 and output node 27 and thus the relay 13 is controlled by microcontroller 24. The microcontroller 24 sets the relay 13 non-conductive via the first control signal 42 if the state signal 41 indicates a current that exceeds I^{I}ₘₐₓ.

At time point B shown in Figure 5, a failure occurs in the microcontroller 24 and is immediately realized by the microcontroller 24 itself (Figure 1) or by a system basis chip 26 connected to the microcontroller 24 (Figure 2). Hence, from time point B the fault signal 43 is indicative of a malfunction of the microcontroller 24 by taking the value "0". Thus, the control signal input of the multiplexer 36 is set to the second data signal input 0 via fault signal 43.

Further, at time point B at least one second electrical consumer of an electric vehicle (not shown) that is supplied by the battery system 100 and is not security relevant for the vehicle is disconnected from the battery system 100 via a control unit (not shown) that might be the system basis chip 26 of Figure 2. Hence, as shown in Figure 5, the current I (curved line) starts dropping from the time point B in order to increase safety of the vehicle.

The second data signal input 0 of multiplexer 36 is connected to the state signal 41 (or the amplified sensor signal 41') by a hardware path described in more detail in the following. At least with respect to the second embodiment of the control unit 20 as illustrated in Figure 4 the relay 13 is set conductive as long as it receives a high signal "1" via the output node 27.

As a part of said hardware path, the second data signal input of multiplexer 36 is connected to the fault signal 43 via an OR gate 35 and a first latching element 32. Therein, the first latching element 32 receives fault signal 43 as an input and transmits an output to OR gate 35. The first latching element 32 latches a high input signal supplied thereto for a predetermined second time period T₂. As the value of the fault signal 43 changes from high to low at time point B of Figure 5, the first latching element 32 outputs a high value "1" to a first input of OR gate 35 until the second time period T₂, which started at time point B, lapses. The OR gate 35 outputs a high value "1" as long as a single input provided thereto is high and thus provides a high signal "1" to the second date signal input 0 of the multiplexer 36 until the second time period T₂, started at time point B, lapses.

As illustrated in Figure 5 during the second time period T₂, i.e. during initial mode C, the current drops below a second current threshold I^{II}ₘₐₓ due to cutting not security relevant second electrical consumers from the battery system 100. During initial mode, no threshold based control of relay 13 occurs in order to allow reducing the current consumption below I^{II}ₘₐₓ while preventing a premature shut down of the battery system 100 via the relay 13.

After lapse of the second time period T₂, which started at time point B, the first latching element 32 does not longer provide a high signal "1" to the first input of OR gate 35. Thus, whether or not the OR gate 35 outputs a high signal to multiplexer 36 solely depends on the signal applied to a second input of the OR gate 35. The second input of the OR gate 35 receives an output signal of an AND gate 34, the inputs of which are described below.

A second input of the AND gate 34 is connected to the fault signal 43 via a second latching element 33. The second latching element 33 latches a high input signal supplied thereto for a predetermined first time period T₁. As the value of the fault signal 43 changes from high to low at time point B of Figure 5, the second latching element 33 outputs a high value "1" until the lapse of first time period T₁, which started at time point B. Thus, at the end of the first time period T₁, i.e. at point G illustrated in Figure 5, the second latching element 33 outputs a low signal "0" to AND gate 34 that thus also outputs a low signal "0" to multiplexer 36. Hence, at point G the availability mode of the battery system 100 that started with the fault at time point B ends and the battery system 100 is inevitably shut down by setting relay 13 non conductive.

A first input of the AND gate 34 is connected to a comparator 31 as already described with respect to Figure 3 that receives the state signal 41 (or the amplified sensor signal 41') and outputs a second control signal 44 based on a comparison between this signal 41 or 41' and a predetermined threshold. Therein, the comparator 31 outputs a high signal "1" if the state signal 41 (or the amplified sensor signal 41') indicates a current below threshold current I^{II}ₘₐₓ as illustrated in Figure 5 and outputs a low signal "0" if the state signal 41 (or the amplified sensor signal 41') indicates a current above threshold current I^{II}ₘₐₓ as illustrated in Figure 5.

Hence, during the first time period T₁ and after the lapse of the second time period T₂, i.e. between the points D and G or during low performance mode E as illustrated in Figure 5, a sensor-based control of the relay 13 is performed in order to realize an overcurrent protection, whereas the overcurrent is lowered from I^{I}ₘₐₓ to I^{II}ₘₐₓ. In other words, during the low performance mode E, the battery system 100 is shut down via relay 13 if the state signal 41 (or the amplified sensor signal 41') indicates a current above threshold current I^{II}ₘₐₓ.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 10: battery cell
- 11: first node of battery system
- 12: second node of battery system
- 13: power switch (relay)
- 14: external load
- 15: sensor (shunt resistor)

- 20: control unit
- 21: input node
- 22: front end circuit
- 23: amplification circuit
- 24: microcontroller
- 25: switch control circuit
- 26: system basis chip
- 27: output node

- 31: comparator circuit
- 32: first latching element
- 33: second latching element
- 34: "AND" gate
- 35: "OR" gate
- 36: multiplexer

- 40: sensor signal
- 41: state signal
- 42: first control signal
- 43: fault signal
- 44: second control signal

## Claims

1. Control unit (20) for a battery system (100), the control unit (20) comprising:
an input node (21) configured for receiving a sensor signal (40) indicative of a state of at least one of a plurality of battery cells (10) of the battery system (100);
a microcontroller (24) connected to the input node (21) and configured for generating a first control signal (42) based on the sensor signal (40); and
a switch control circuit (25) configured for controlling a power switch (13) of the battery system by:
receiving the sensor signal (40), the first control signal (42), and a fault signal (43) indicative of an operation state of the microcontroller (24),
generating a second control signal (44) based on the sensor signal (40),
transmitting the first control signal (42) to the output node (27) if the fault signal (41) is indicative of an operability of the microcontroller (24), and
transmitting the second control signal (44) to the output node (27) if the fault signal (41) is indicative of a malfunction of the microcontroller (24).

2. Control unit (20) according to claim 1, further comprising
a front end circuit (22) interconnected between the input node (21) and the microcontroller (24) and configured for generating a state signal (41) based on the sensor signal (40),
wherein the microcontroller (24) is configured for generating a first control signal (42) based on the state signal (41), and
wherein switch control circuit (25) is configured for receiving the state signal (41) and generating a second control signal (44) based on the state signal (41).

3. Control unit (20) according to any one of the preceding claims, further comprising:
an amplification circuit (23) interconnected between one of the input node (21) and the front end circuit (22) and the switch control circuit (25),
wherein the switch control circuit (25) is configured to generate the second control signal (44) based on the amplified state signal (42).

4. Control unit (20) according to any one of the preceding claims, wherein the switch control circuit (25) is a hardware path with an failure in time, FIT, rate of 100 or less failures per 10⁹ h.

5. Battery system (100), comprising
a plurality of battery cells (10) electrically connected in series between a first node (11) and a second node (12);
a power switch (13) interconnected between the first node (11) or the second node (12) and at least one external load (14); and
a control unit (20) according to any one of the claims 1 to 4 connected with its output node (27) to the power switch (13) for controlling the power switch (13).

6. Battery system (100) according to claim 5, wherein the switch control circuit (25) is configured for setting the power switch (13) non-conductive after a first time period (T₁) from receiving a fault signal (43) indicative of a malfunction of the microcontroller (24).

7. Battery system (100) according to claim 5 or 6, wherein the switch control circuit (25) is configured for generating a second control signal (44) causing the power switch (13) to be set non-conductive if the state signal (41) exceeds a predetermined threshold.

8. Battery system (100) according to any one of claims 5 to 7, wherein the switch control circuit (25) is configured for setting the power switch (13) conductive for a second time period (T₂) from receiving a fault signal (43) indicative of a malfunction of the microcontroller (24).

9. Battery system (100) according to claim 8, wherein the second time period (T₂) is less than the fault tolerant time interval, FTTI, of the plurality of battery cells (10).

10. Battery system (100) according to any one of claims 5 to 9, further comprising at least one sensor (15) configured for detecting at least one of a current, a voltage and a temperature of at least one of the plurality of battery cells (10) as sensor signal (40).

11. Vehicle comprising a battery system (100) according to any one of the claims 5 to 10, wherein the battery system (100) is electrically connected to an external load (14) comprising at least one first electrical consumer.

12. Vehicle according to claim 11, further comprising at least one second electrical consumer electrically connected to the battery system (100) and a control unit configured for shutting off the at least one second electrical consumer in response to receiving a fault signal indicative of a malfunction of the microcontroller (24), wherein the at least one second electrical consumer is not security relevant for the vehicle.

13. Method for operating a battery system (100) with a plurality of battery cells (10) electrically connected in series between a first node (11) and a second node (12), a power switch (13) interconnected between the first node (11) or the second node (12) and at least one external load (14), and a control unit (20) configured for controlling the power switch (13), the method comprising the steps:
Detecting, by a sensor (15), a sensor signal (40) indicative of a state of at least one of the plurality of battery cells (10);
Determining, by a microcontroller (24) of the control unit (20), a first control signal (42) for controlling the power switch (13) based on the sensor signal (40); and,
Receiving, by a switch control circuit (25) of the control unit (20), the sensor signal (40), the first control signal (42), and a fault signal (43) indicative of an operation state of the microcontroller (24); and
Generating, by the switch control circuit (25), a second control signal (44) based on the sensor signal (40) and transmitting, to the power switch (13), the first control signal (42) if the fault signal (41) is indicative of an operability of the microcontroller (24), and the second control signal (44), if the fault signal (41) is indicative of a malfunction of the microcontroller (24).

14. Method according to claim 13, further comprising at least one of the following steps of the switch control circuit (25):
Setting the power switch (13) non-conductive after a first time period (T₁) from receiving a fault signal (43) indicative a malfunction of the microcontroller (24);
Setting the power switch (13) conductive for a predetermined second time period (T₂) from receiving a fault signal (43) indicative of a malfunction of the microcontroller (24); and
Generating, during the first time period (T₁), a second control signal (44) causing the power switch (13) to be set non-conductive if the state signal (41) exceeds a predetermined threshold.

## Patentansprüche

1. Steuereinheit (20) für ein Batteriesystem (100), wobei die Steuereinheit (20) Folgendes umfasst:
einen Eingangsknoten (21), der zum Empfangen eines Sensorsignals (40) ausgelegt ist, das einen Zustand mindestens einer Vielzahl von Batteriezellen (10) des Batteriesystems (100) anzeigt;
einen Microcontroller (24), der mit dem Eingangsknoten (21) verbunden und zum Erzeugen eines ersten Steuersignals (42) auf Basis des Sensorsignals (40) konfiguriert ist; und
einen Schaltersteuerschaltkreis (25), der zum Steuern eines Netzschalters (13) des Batteriesystems durch
Empfangen des Sensorsignals (40), des ersten Steuersignals (42) und eines Fehlersignals (43), die einen Betriebszustand des Microcontrollers (24) anzeigen,
Erzeugen eines zweiten Steuersignals (44) auf Basis des Sensorsignals (40),
Übertragen des ersten Steuersignals (42) an den Ausgangsknoten (27), wenn das Fehlersignal (41) eine Betriebsfähigkeit des Microcontrollers (24) anzeigt, und
Übertragen des zweiten Steuersignals (44) an den Ausgangsknoten (27), wenn das Fehlersignal (41) eine Störung des Microcontrollers (24) anzeigt, konfiguriert ist.

2. Steuereinheit (20) nach Anspruch 1, ferner umfassend
einen Front-End-Schaltkreis (22), der zwischen den Eingangsknoten (21) und den Microcontroller (24) gekoppelt und zum Erzeugen eines Zustandssignals (41) auf Basis des Sensorsignals (40) konfiguriert ist,
wobei der Microcontroller (24) zum Erzeugen eines ersten Steuersignals (42) auf Basis des Zustandssignals (41) konfiguriert ist, und
wobei der Schaltersteuerschaltkreis (25) zum Empfangen des Zustandssignals (41) und Erzeugen eines zweiten Steuersignals (44) auf Basis des Zustandssignals (41) konfiguriert ist.

3. Steuereinheit (20) nach einem der vorhergehenden Ansprüche, ferner umfassend:
einen Verstärkungsschaltkreis (23), der zwischen den Eingangsknoten (21) oder den Front-End-Schaltkreis (22) und den Schaltersteuerschaltkreis (25) gekoppelt ist,
wobei der Schaltersteuerschaltkreis (25) zum Erzeugen des zweiten Steuersignals (44) auf der Basis des verstärkten Zustandssignals (42) konfiguriert ist.

4. Steuereinheit (20) nach einem der vorhergehenden Ansprüche, wobei der Schaltersteuerschaltkreis (25) ein Hardware-Pfad mit einer Failure-in-Time-Rate, FIT-Rate, von 100 oder weniger Ausfällen pro 10⁹ Stunde ist.

5. Batteriesystem (100), umfassend
eine Vielzahl von Batteriezellen (10), die zwischen einem ersten Knoten (11) und einem zweiten Knoten (12) in Reihe elektrisch verbunden sind;
ein Netzschalter (13), der zwischen den ersten Knoten (11) oder den zweiten Knoten (12) und mindestens eine externe Last (14) gekoppelt ist; und
eine Steuereinheit (20) nach einem der Ansprüche 1 bis 4, deren Ausgangsknoten (27) mit dem Netzschalter (13) zum Steuern des Netzschalters (13) verbunden ist.

6. Batteriesystem (100) nach Anspruch 5, wobei der Schaltersteuerschaltkreis (25) zum Einstellen des Netzschalters (13) als nichtleitend nach einer ersten Zeitdauer (T₁) ab dem Empfang eines Fehlersignals (43), das eine Störung des Microcontrollers (24) anzeigt, konfiguriert ist.

7. Batteriesystem (100) nach Anspruch 5 oder 6, wobei der Schaltersteuerschaltkreis (25) zum Erzeugen eines zweiten Steuersignals (44) konfiguriert ist, das den Netzschalter (13) dazu veranlasst, als nichtleitend eingestellt zu sein, wenn das Zustandssignal (41) einen vorbestimmten Schwellenwert übersteigt.

8. Batteriesystem (100) nach einem der Ansprüche 5 bis 7, wobei der Schaltersteuerschaltkreis (25) zum Einstellen des Netzschalters (13) als leitend für eine zweite Zeitdauer (T₂) ab dem Empfang eines Fehlersignals (43), das eine Störung des Microcontrollers (24) anzeigt, konfiguriert ist.

9. Batteriesystem (100) nach Anspruch 8, wobei die zweite Zeitdauer (T₂) weniger als das Fehlertoleranz-Zeitintervall, FTTI (fault tolerant time interval), der Vielzahl von Batteriezellen (10) beträgt.

10. Batteriesystem (100) nach einem der Ansprüche 5 bis 9, ferner umfassend mindestens einen Sensor (15), der zum Detektieren eines Stroms, einer Spannung und/oder einer Temperatur mindestens einer der Vielzahl von Batteriezellen (10) als Sensorsignal (40) konfiguriert ist.

11. Fahrzeug, das ein Batteriesystem (100) nach einem der Ansprüche 5 bis 10 umfasst, wobei das Batteriesystem (100) elektrisch mit einer externen Last (14) verbunden ist, die mindestens einen ersten Stromverbraucher umfasst.

12. Fahrzeug nach Anspruch 11, ferner umfassend mindestens einen zweiten Stromverbraucher, der mit dem Batteriesystem (100) und einer Steuereinheit, die zum Abschalten des mindestens einen zweiten Stromverbrauchers in Ansprechen auf das Empfangen eines Fehlersignals, das eine Störung des Microcontrollers (24) anzeigt, konfiguriert ist, elektrisch verbunden ist, wobei der mindestens eine zweite Stromverbraucher für das Fahrzeug nicht sicherheitsrelevant ist.

13. Verfahren zum Betreiben eines Batteriesystems (100) mit einer Vielzahl von Batteriezellen (10), die zwischen einem ersten Knoten (11) und einem zweiten Knoten (12) in Reihe elektrisch verbunden sind, einem Netzschalter (13), der zwischen den ersten Knoten (11) oder den zweiten Knoten (12) und mindestens eine externe Last (14) gekoppelt ist, und einer Steuereinheit (20), die zum Steuern des Netzschalters (13) konfiguriert ist, wobei das Verfahren die folgenden Schritte umfasst:
Detektieren eines Sensorsignals (40), das einen Zustand mindestens einer der Vielzahl von Batteriezellen (10) anzeigt, durch einen Sensor (15);
Bestimmen eines ersten Steuersignals (42) zum Steuern des Netzschalters (13) auf Basis des Sensorsignals (40) durch einen Microcontroller (24) der Steuereinheit (20); und
Empfangen des Sensorsignals (40), des ersten Steuersignals (42) und eines Fehlersignals (43), die einen Betriebszustand des Microcontrollers (24) anzeigen, durch einen Schaltersteuerschaltkreis (25) der Steuereinheit (20); und
Erzeugen eines zweiten Steuersignals (44) auf Basis des Sensorsignals (40) durch den Schaltersteuerschaltkreis (25) und Übertragen des ersten Steuersignals (42), wenn das Fehlersignal (41) eine Betriebsfähigkeit des Microcontrollers (24) anzeigt, und des zweiten Steuersignals (44), wenn das Fehlersignal (41) eine Störung des Microcontrollers (24) anzeigt, an den Netzschalter (13).

14. Verfahren nach Anspruch 13, ferner umfassend mindestens einen der folgenden Schritte des Schaltersteuerschaltkreises (25):
Einstellen des Netzschalters (13) als nichtleitend nach einer ersten Zeitdauer (T₁) ab dem Empfang eines Fehlersignals (43), das eine Störung des Microcontrollers (24) anzeigt;
Einstellen des Netzschalters (13) als leitend für eine vorbestimmte zweite Zeitdauer (T₂) ab dem Empfang eines Fehlersignals (43), das eine Störung des Microcontrollers (24) anzeigt; und
Erzeugen, während der ersten Zeitdauer (T₁), eines zweiten Steuersignals (44), das den Netzschalter (13) dazu veranlasst, als nichtleitend eingestellt zu sein, wenn das Zustandssignal (41) einen vorbestimmten Schwellenwert übersteigt.

## Revendications

1. Unité de commande (20) pour un système de batterie (100), l'unité de commande (20) comprenant :
un nœud d'entrée (21) configuré pour recevoir un signal de capteur (40) indiquant un état d'au moins l'une parmi une pluralité d'éléments de batterie (10) du système de batterie (100) ;
un microcontrôleur (24) connecté au nœud d'entrée (21) et configuré pour générer un premier signal de commande (42) sur la base du signal de capteur (40) ; et
un circuit de commande de commutation (25) configuré pour commander un commutateur de puissance (13) du système de batterie par le fait de :
recevoir le signal de capteur (40), le premier signal de commande (42) et un signal d'anomalie (43) indiquant un état d'exploitation du microcontrôleur (24),
générer un second signal de commande (44) sur la base du signal de capteur (40),
transmettre le premier signal de commande (42) au nœud de sortie (27) si le signal d'anomalie (41) indique une exploitabilité du microcontrôleur (24), et
transmettre le second signal de commande (44) au nœud de sortie (27) si le signal d'anomalie (41) indique un dysfonctionnement du microcontrôleur (24).

2. Unité de commande (20) selon la revendication 1, comprenant en outre
un circuit frontal (22) interconnecté entre le nœud d'entrée (21) et le microcontrôleur (24) et configuré pour générer un signal d'état (41) sur la base du signal de capteur (40),
dans lequel le microcontrôleur (24) est configuré pour générer un premier signal de commande (42) sur la base du signal d'état (41), et
dans lequel le circuit de commande de commutation (25) est configuré pour recevoir le signal d'état (41) et générer un second signal de commande (44) sur la base du signal d'état (41).

3. Unité de commande (20) selon l'une quelconque des revendications précédentes, comprenant en outre :
un circuit d'amplification (23) interconnecté entre l'un parmi le nœud d'entrée (21) et le circuit frontal (22) et le circuit de commande de commutation (25),
dans lequel le circuit de commande de commutation (25) est configuré pour générer le second signal de commande (44) sur la base du signal d'état amplifié (42).

4. Unité de commande (20) selon l'une quelconque des revendications précédentes, dans laquelle le circuit de commande de commutation (25) est un chemin matériel avec un taux d'intensité de défaillance, FIT, inférieur ou égal à 100 défaillances par 10⁹ h.

5. Système de batterie (100), comprenant
une pluralité d'éléments de batterie (10) électriquement connectés en série entre un premier nœud (11) et un second nœud (12) ;
un commutateur de puissance (13) interconnecté entre le premier nœud (11) ou le second nœud (12) et au moins une charge (14) extérieure ; et
une unité de commande (20) selon l'une quelconque des revendications 1 à 4 connectée avec son nœud de sortie (27) au commutateur de puissance (13) pour commander le commutateur de puissance (13).

6. Système de batterie (100) selon la revendication 5, dans lequel le circuit de commande de commutation (25) est configuré pour régler le commutateur de puissance (13) en non conducteur après un premier délai (T₁) à partir de la réception d'un signal d'anomalie (43) indiquant un dysfonctionnement du microcontrôleur (24).

7. Système de batterie (100) selon la revendication 5 ou 6, dans lequel le circuit de commande de commutation (25) est configuré pour générer un second signal de commande (44) amenant le commutateur de puissance (13) à être réglé en non conducteur si le signal d'état (41) dépasse un seuil prédéterminé.

8. Système de batterie (100) selon l'une quelconque des revendications 5 à 7, dans lequel le circuit de commande de commutation (25) est configuré pour régler le commutateur de puissance (13) en conducteur pour un second délai (T₂) à partir de la réception d'un signal d'anomalie (43) indiquant un dysfonctionnement du microcontrôleur (24) .

9. Système de batterie (100) selon la revendication 8, dans lequel le second délai (T₂) est inférieur à l'intervalle de temps de tolérance aux anomalies, FTTI, de la pluralité d'éléments de batterie (10).

10. Système de batterie (100) selon l'une quelconque des revendications 5 à 9, comprenant en outre au moins un capteur (15) configuré pour détecter au moins l'un parmi un courant, une tension et une température d'au moins l'une parmi la pluralité d'éléments de batterie (10) en tant que signal de capteur (40).

11. Véhicule comprenant un système de batterie (100) selon l'une quelconque des revendications 5 à 10, dans lequel le système de batterie (100) est électriquement connecté à une charge (14) extérieure comprenant au moins un premier consommateur électrique.

12. Véhicule selon la revendication 11, comprenant en outre au moins un deuxième consommateur électrique électriquement connecté au système de batterie (100) et une unité de commande configurée pour arrêter l'au moins un deuxième consommateur électrique en réponse à la réception d'un signal d'anomalie indiquant un dysfonctionnement du microcontrôleur (24), dans lequel l'au moins un deuxième consommateur électrique n'est pas pertinent en matière de sécurité pour le véhicule.

13. Procédé d'exploitation d'un système de batterie (100) avec une pluralité d'éléments de batterie (10) électriquement connectés en série entre un premier nœud (11) et un second nœud (12), un commutateur de puissance (13) interconnecté entre le premier nœud (11) ou le second nœud (12) et au moins une charge (14) extérieure, et une unité de commande (20) configurée pour commander le commutateur de puissance (13), le procédé comprenant les étapes consistant à :
détecter, par un capteur (15), un signal de capteur (40) indiquant un état d'au moins l'un parmi une pluralité d'éléments de batterie (10) ;
déterminer, par un microcontrôleur (24) de l'unité de commande (20), un premier signal de commande (42) pour commander le commutateur de puissance (13) sur la base du signal de capteur (40) ; et,
recevoir, par un circuit de commande de commutation (25) de l'unité de commande (20), le signal de capteur (40), le premier signal de commande (42) et un signal d'anomalie (43) indiquant un état d'exploitation du microcontrôleur (24) ; et
générer, par le circuit de commande de commutation (25), un second signal de commande (44) sur la base du signal de capteur (40) et transmettre, au commutateur de puissance (13), le premier signal de commande (42) si le signal d'anomalie (41) indique une exploitabilité du microcontrôleur (24), et le second signal de commande (44) si le signal d'anomalie (41) indique un dysfonctionnement du microcontrôleur (24).

14. Procédé selon la revendication 13, comprenant en outre au moins l'une des étapes suivantes du circuit de commande de commutation (25) consistant à :
régler le commutateur de puissance (13) en non conducteur après un premier délai (T₁) à partir de la réception d'un signal d'anomalie (43) indiquant un dysfonctionnement du microcontrôleur (24) ;
régler le commutateur de puissance (13) en conducteur pour un second délai (T₂) prédéterminé à partir de la réception d'un signal d'anomalie (43) indiquant un dysfonctionnement du microcontrôleur (24) ; et
générer, pendant le premier délai (T₁), un second signal de commande (44) amenant le commutateur de puissance (13) à être réglé en non conducteur si le signal d'état (41) dépasse un seuil prédéterminé.
